# EUROPÄISCHE PATENTANMELDUNG

(11) **EP 4 725 710 A1**
(43) Veröffentlichungstag der Anmeldung: **15.04.2026**
(21) Anmeldenummer: 25206754.1
(22) Anmeldetag: 06.10.2025
(51) Int. Cl.: B41J 3/407, B23K 26/352, B41J 2/44, G05B 19/4099, G06K 15/02

(54) **VERFAHREN UND VORRICHTUNG ZUM LASERMARKIEREN VON OBJEKTEN MIT EINER GEKRÜMMTEN FLÄCHE**

(30) Priorität: 07.10.2024 DE 102024128858
(71) Anmelder: KRONES AG, 93073 Neutraubling (DE)
(72) Erfinder: KRAUS, Andreas, 93073 Neutraubling (DE)
(74) Vertreter: v. Bezold & Partner Patentanwälte - PartG mbB

(57) **Zusammenfassung**

Die Erfindung betrifft u.a. ein Verfahren zum Lasermarkieren von Objekten (12) mit einer gekrümmten Fläche. Eine zweidimensionale Darstellung (D1) einer gewünschten Lasermarkierung (L1) wird bereitgestellt. Die bereitgestellte zweidimensionale Darstellung (D1) wird abhängig von einer Krümmung der gekrümmten Fläche angepasst. Eine Lasermarkierung (L2) wird auf der gekrümmten Fläche eines Objekts (12) mittels eines Lasermarkierungssystems (10) abhängig von der angepassten zweidimensionalen Darstellung (D2) lasermarkiert.

## Beschreibung

### Technisches Gebiet

Die Erfindung betrifft ein Verfahren und eine Vorrichtung zum Lasermarkieren von Objekten, vorzugsweise Behältern, mit einer gekrümmten Fläche.

### Technischer Hintergrund

Herkömmlich werden Behälter mehrheitlich mit Etiketten ausgestattet. Typische Varianten sind Papier- oder Kunststoffetiketten, welche mit Heiß- oder Kaltleim oder auch selbstklebend verarbeitet und auf die Behälter aufgebracht werden.

Etiketten können im Recyclingprozess problematisch sein, z. B. wegen der verwendeten Drucktinte, wasserfeste Papiere, Leim usw. Im Rahmen der weltweit zunehmenden Nachhaltigkeitsdiskussionen können hierbei verschiedene Technologie-inhärente Merkmale als nachteilig angesehen werden. Dazu können insbesondere die Verwendung von Kunststoffen zur Behälterdekoration, ein schlechter CO2-Footprint bei der Etikettenherstellung (v.a. Kunststoffe) über Logistik bis hin zur Applikation (v.a. Schrumpfsleeves) und eine eingeschränkte Recyclebarkeit in den üblichen Abfallströmen zählen. Analoge Punkte lassen sich auch bei den Direktbedruckungsverfahren nennen.

Im Prinzip ist es daher wünschenswert, komplett auf Etiketten zu verzichten. Erforderliche Informationen könnten bspw. direkt über ein Lasermarkierungssystem auf die Behälter markiert bzw. geschrieben werden. Eine solche Technik wird bspw. bereits zum Lasermarkieren einer Produktionsnummer oder eines Mindesthaltbarkeitsdatums genutzt. Beim Lasermarkieren kann durch den Laserstrahl und die damit auf der Oberfläche des Behälters entstehende Wärme eine physikalische Veränderung der Oberfläche des Behälters bewirkt werden (z. B. Weißbruch bei PET-Behältern), sodass gewünschte Zeichen auf die Oberfläche lasermarkiert werden können.

Beispielsweise offenbart die GB 2576220 A eine Lasermarkierungsvorrichtung zum Markieren von Behältern.

Typische Lasermarkierungssysteme nutzen eine Optik, die eine planare Fokusebene vorgibt. Damit ist das Lasermarkierungssystem dazu optimiert, um auf einer zweidimensionalen Fläche in der planaren Fokusebene zu lasern.

Will man gekrümmte dreidimensionale Flächen lasermarkieren, so kann dies abhängig von einer Schärfentiefe (engl. DOF - depth of field) zwar weiterhin mit einer ausreichenden Schärfe möglich sein. Allerdings kann je nach Krümmung und damit einhergehenden variablen Abstand zur planaren Fokusebene eine Abweichung zwischen Ist- und Sollposition des auftreffenden Laserstrahls auftreten. Diese Abweichung kann zu Verzerrungen in der Grafik oder dem Text führen, die optisch auffällig und unschön sein kann und zu einem unzureichenderen Qualitätseindruck führt.

Der Erfindung liegt die Aufgabe zu Grunde, eine verbesserte Technik zum Lasermarkieren von Behältern zu schaffen, mit der sich vorzugsweise eine Qualität einer Lasermarkierung auf einer gekrümmten Fläche eines Objekts verbessern lässt, bevorzugt ohne Leistungseinschränkungen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft ein (z. B. computergestütztes) Verfahren zum Lasermarkieren von Objekten, vorzugsweise Behälter, mit einer (z. B. kreiszylindrisch) gekrümmten (z. B. Mantel-) Fläche. Das Verfahren weist auf:
- Bereitstellen einer zweidimensionalen Darstellung (Abbildung) einer gewünschten Lasermarkierung (z. B. mittels einer Verarbeitungseinrichtung);
- (z. B. teilautomatisches oder vollautomatisches) Anpassen der bereitgestellten zweidimensionalen Darstellung abhängig von einer Krümmung (Krümmungsinformation, z. B. Krümmungsradius oder anderer Krümmungsparameter oder davon abgeleitete Größe) der gekrümmten Fläche (z. B. mittels einer Verarbeitungseinrichtung);
- Lasermarkieren einer Lasermarkierung auf der gekrümmten Fläche (mindestens) eines Objekts mittels eines Lasermarkierungssystems abhängig von der angepassten zweidimensionalen Darstellung (Abbildung).

Vorteilhaft ermöglicht das Verfahren, dass eine verzerrungsfreie Lasermarkierung auf beliebig gekrümmten Flächen generiert werden kann. Hierzu ist vorteilhaft keine aufwendige Anpassung bei der Erstellung von Bewegungsbefehlen von Spiegelantrieben des Lasermarkierungssystems notwendig. Stattdessen kann einfach eine verzerrte zweidimensionale Darstellung der gewünschten Lasermarkierung erstellt und von dem Lasermarkierungssystem lasermarkiert werden. Die Verzerrung ist dabei vorteilhaft so, dass eine sich durch das Lasermarkieren auf der gekrümmten Fläche des Objekts ergebende Verzerrung reduziert oder kompensiert wird. Vorteilhaft kann damit auch eine Lasermarkierung einer Vielzahl von Objekten im industriellen Maßstab ohne Leistungseinschränkungen und ohne Qualitätseinschränkungen ermöglicht werden.

Es ist möglich, dass das Objekt mehrere gekrümmte Flächen aufweist, die jeweils mit einer eigenen Lasermarkierung zu versehen sind. Es versteht sich, dass das hierin offenbarte Verfahren entsprechend für jede der gekrümmten Flächen bzw. für jede gewünschte Lasermarkierung angewendet werden kann.

Vorzugsweise kann das Objekt bzw. können die Objekte während des Lasermarkierens von einem Objektförderer, vorzugsweise Behälterförderer, entlang des Lasermarkierungssystems transportiert werden.

Bevorzugt kann die Lasermarkierung Text, Schriftzeichen und/oder grafische Gestaltungselemente (z. B. Linien, Kreise und/oder Formen mit beliebiger Kontur) aufweisen.

In einem Ausführungsbeispiel weist das Verfahren ferner ein Übermitteln der angepassten zweidimensionalen Darstellung an eine Steuereinrichtung des Lasermarkierungssystems auf, wobei bspw. das Lasermarkierungssystem, vorzugsweise ein Markierkopf des Lasermarkierungssystems, beim Lasermarkieren von der Steuereinrichtung abhängig von der übermittelten, angepassten zweidimensionalen Darstellung betrieben wird. Vorteilhaft kann damit das Verfahren auch mit einem herkömmlichen Lasermarkierungssystem verwendet werden, an die einfach die bereits zuvor angepasste zweidimensionale Darstellung zum Lasermarkieren übermittelt wird.

In einem weiteren Ausführungsbeispiel weist das Lasermarkieren auf:
- Erzeugen von Bewegungsbefehlen für einen Markierkopf, vorzugsweise von Antriebssignalen für Antriebe von Spiegeln des Markierkopfes, des Lasermarkierungssystems (z. B. mittels der Steuereinrichtung) abhängig von der angepassten zweidimensionalen Darstellung; und
- Übermitteln der erzeugten Bewegungsbefehle, vorzugsweise der Antriebssignale, an den Markierkopf (z. B. mittels der Steuereinrichtung).

Vorteilhaft können die Bewegungsbefehle für den Markierkopf somit direkt aus der angepassten zweidimensionalen Darstellung abgeleitet werden, um die durch das Lasermarkieren auf der gekrümmten Fläche bewirkte Verzerrung zu reduzieren oder zu kompensieren.

In einer Ausführungsform wird die zweidimensionale Darstellung als eine Bilddatei (Grafikdatei) bereitgestellt, angepasst und/oder übermittelt. Alternativ oder zusätzlich kann die zweidimensionale Darstellung beispielsweise eine Rastergrafik oder eine Vektorgrafik sein.

In einer weiteren Ausführungsform weist das Anpassen der bereitgestellten zweidimensionalen Darstellung ein Verzerren der bereitgestellten zweidimensionalen Darstellung auf, vorzugsweise in Randbereichen der bereitgestellten zweidimensionalen Darstellung, besonders bevorzugt mit hin zu den Randbereichen zunehmender Intensität des Verzerrens. Vorteilhaft kann somit die durch das Lasermarkieren auf der gekrümmten Fläche bewirkte Verzerrung besonders gut reduziert oder kompensiert werden.

In einer Ausführungsvariante wird die bereitgestellte zweidimensionale Darstellung derart verzerrt, dass mindestens eines erfüllt ist von:
- eine von der Krümmung der gekrümmten Fläche beim Lasermarkieren bewirkte Verzerrung wird reduziert oder im Wesentlichen kompensiert;
- eine von der Krümmung der gekrümmten Fläche beim Lasermarkieren bewirkte Verzerrung wird invertiert; und
- die Verzerrung der bereitgestellten zweidimensionalen Darstellung ist gegenläufig zu einer von der Krümmung der gekrümmten Fläche beim Lasermarkieren bewirkte Verzerrung.

In einer weiteren Ausführungsform weist das Verfahren ferner auf:
- Erfassen der Krümmung mittels einer, vorzugsweise optischen und/oder kameragestützten und/oder lasergestützten, Erfassungseinrichtung, vorzugsweise einmal für mehrere Objekte oder individuell für jedes Objekt; oder
- Vorgeben der Krümmung mittels einer Benutzerschnittstelle, vorzugsweise einmal für mehrere Objekte oder individuell für jedes Objekt; oder
- Empfangen der Krümmung mittels einer Kommunikationsschnittstelle, vorzugsweise einmal für mehrere Objekte oder individuell für jedes Objekt.

Vorteilhaft kann somit je nach Anwendung eine mehr oder weniger aufwendige Erfassung, Vorgabe usw. der Krümmung implementiert sein.

In einem Ausführungsbeispiel ist die gekrümmte Fläche ein Flächensegment einer Kreiszylindermantelfläche, wie z. B. bei einem Behälter.

In einem weiteren Ausführungsbeispiel erfolgt das Anpassen der bereitgestellten zweidimensionalen Darstellung mittels Korrekturfaktoren, die abhängig von der Krümmung vorgegeben sind und auf die bereitgestellte zweidimensionale Darstellung angewendet werden. Vorteilhaft kann damit ein relativ einfaches und für verschiedene Lasermarkierungen flexibel anpassbares Verfahren ermöglicht werden.

In einem weiteren Ausführungsbeispiel erfolgt das Anpassen unter Berücksichtigung von (z. B. geschätzten, simulierten oder gemessenen) Laserstrahlwinkeln, unter denen ein von dem Lasermarkierungssystem abgegebener Laserstrahl auf unterschiedliche Punkte der gekrümmten Fläche auftrifft. Vorteilhaft kann damit eine sehr genaue und qualitativ hochwertige Lasermarkierung auf der gekrümmten Fläche ermöglicht werden.

In einer Ausführungsform weist das Lasermarkierungssystem eine Planfeld-Fokussieroptik, vorzugsweise aufweisend ein F-Theta-Objektiv, auf, die eine (z. B. einzige) planare (zweidimensionale) Fokusebene vorgibt. Das hierin offenbarte Verfahren lässt sich besonders vorteilhaft mit der Planfeld-Fokussieroptik verwenden.

Vorzugsweise kann ein zweidimensionales Linsenfeld der Planfeld-Optik des Lasermarkierungssystems in der planaren Fokusebene liegen.

Vorzugsweise kann ein zweidimensionales Markierfeld des Lasermarkierungssystems, innerhalb dessen eine Fläche von dem Lasermarkierungssystem lasermarkierbar ist, in der planaren Fokusebene liegen.

In einer weiteren Ausführungsform erfolgt das Anpassen der bereitgestellten zweidimensionalen Darstellung unter Berücksichtigung (z. B. mittels einer Verarbeitungseinrichtung) ermittelter geometrischer Abweichungen zwischen der gekrümmten Fläche und der planaren Fokusebene. Vorteilhaft kann damit ebenfalls eine sehr genaue und qualitativ hochwertige Lasermarkierung auf der gekrümmten Fläche ermöglicht werden.

In einer Ausführungsvariante erfolgt das Lasermarkieren spaltensegmentweise. Vorteilhaft kann damit eine hohe Markiergeschwindigkeit auf der gekrümmten Fläche erreicht werden.

In einer weiteren Ausführungsvariante weist das Verfahren ferner auf:
- Erfassen der Lasermarkierung auf der gekrümmten Fläche mittels einer (z. B. weiteren) Erfassungseinrichtung; und
- Ermitteln einer Abweichung zwischen der erfassten Lasermarkierung und der gewünschten Lasermarkierung (z. B. mittels der Verarbeitungseinrichtung); und optional
- weiteres (z. B. teilautomatisches oder vollautomatisches) Anpassen der angepassten zweidimensionalen Darstellung abhängig von der ermittelten Abweichung (z. B. mittels der Verarbeitungseinrichtung), vorzugsweise zum Reduzieren oder Kompensieren der Abweichung; und
- Lasermarkieren einer Lasermarkierung auf der gekrümmten Fläche mindestens eines weiteren Objekts mittels des Lasermarkierungssystems abhängig von der weiter angepassten zweidimensionalen Darstellung.

Vorteilhaft kann damit eine erneute Korrektur bzw. iterative Anpassung zur sukzessiven Annäherung an die gewünschte Lasermarkierung ermöglicht werden.

Ein weiterer Aspekt betrifft eine Vorrichtung zum Lasermarkieren von Objekten, vorzugsweise Behältern, mit einer (z. B. kreiszylindrisch) gekrümmten (z. B. Mantel-) Fläche, wobei die Vorrichtung ein Lasermarkierungssystem aufweist und zum Ausführen eines Verfahrens wie hierin offenbart konfiguriert ist.

Vorteilhaft lassen sich mit der Vorrichtung die gleichen Vorteile erzielen, die bereits unter Bezugnahme auf das Verfahren beschrieben wurden.

Es versteht sich, dass hierin alle unter Bezugnahme auf das Verfahren offenbarten Merkmale auch in Kombination mit der Vorrichtung offenbart und beanspruchbar sind, einzeln und in jeglicher Kombination. Ebenfalls sind alle hierin unter Bezugnahme auf die Vorrichtung offenbarten Merkmale auch in Kombination mit dem Verfahren offenbart und beanspruchbar, einzeln und in jeglicher Kombination.

Beispielsweise kann die Vorrichtung eine Verarbeitungseinrichtung aufweisen, die dazu konfiguriert ist:
- eine bereitgestellte zweidimensionale Darstellung einer gewünschten Lasermarkierung abhängig von einer Krümmung der gekrümmten Fläche anzupassen; und
- die angepasste zweidimensionale Darstellung an eine Steuereinrichtung eines Lasermarkierungssystems zu senden.

Beispielsweise kann das Lasermarkierungssystem eine Steuereinrichtung aufweisen, die dazu konfiguriert ist:
- die angepasste zweidimensionale Darstellung zu empfangen; und
- das Lasermarkierungssystem, z. B. dessen Markierkopf, abhängig von der empfangenen, angepassten zweidimensionalen Darstellung zum Lasermarkieren einer Lasermarkierung auf der gekrümmten Fläche zu betreiben.

In einem weiteren Ausführungsbeispiel weist die Vorrichtung ferner einen Objektförderer, vorzugsweise Behälterförderer, zum Fördern der Objekte entlang des Lasermarkierungssystems, vorzugsweise während des Lasermarkierens mittels des Lasermarkierungssystems, auf. Vorteilhaft kann damit ein kontinuierlicher Betrieb im industriellen Maßstab und eine Integration in eine Behälterbehandlungsanlage ermöglicht werden.

Ein weiterer Aspekt betrifft eine Behälterbehandlungsanlage, die dazu konfiguriert ist, ein Verfahren wie hierin offenbart auszuführen, und/oder die eine Vorrichtung wie hierin offenbart aufweist. Vorteilhaft lassen sich mit der Behälterbehandlungsanlage die gleichen Vorteile erzielen, die bereits unter Bezugnahme auf das Verfahren beschrieben wurden.

Vorzugsweise kann die Behälterbehandlungsanlage zum Temperieren, Herstellen, Reinigen, Beschichten, Prüfen, Abfüllen, Verschließen, Pasteurisieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie, ausgebildet sein.

Beispielsweise kann die Behälterbehandlungsanlage eine Getränkeabfüllanlage sein.

Beispielsweise können die Behälter als Flaschen, Dosen, Kanister, Kartons, Flakons, Tuben usw. ausgeführt sein.

Vorzugsweise kann sich der Begriff "Steuereinrichtung" und/oder "Verarbeitungseinrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung eines beispielhaften Lasermarkierungssystems;
- Figur 2: eine perspektivische Darstellung einer beispielhaften Vorrichtung beim Lasermarkieren eines Objekts;
- Figur 3: eine schematische Darstellung eines Lasermarkierungsvorgangs;
- Figur 4: eine schematische Darstellung zum Aufzeigen einer Entstehung potentieller Abweichungen zwischen einer gewünschten Lasermarkierung und einer tatsächlichen Lasermarkierung gemäß einem nicht-erfindungsgemäßen Lasermarkierverfahren; und
- Figuren 5 und 6: schematische Darstellungen eines Verfahrens zum Lasermarkieren gemäß einem Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

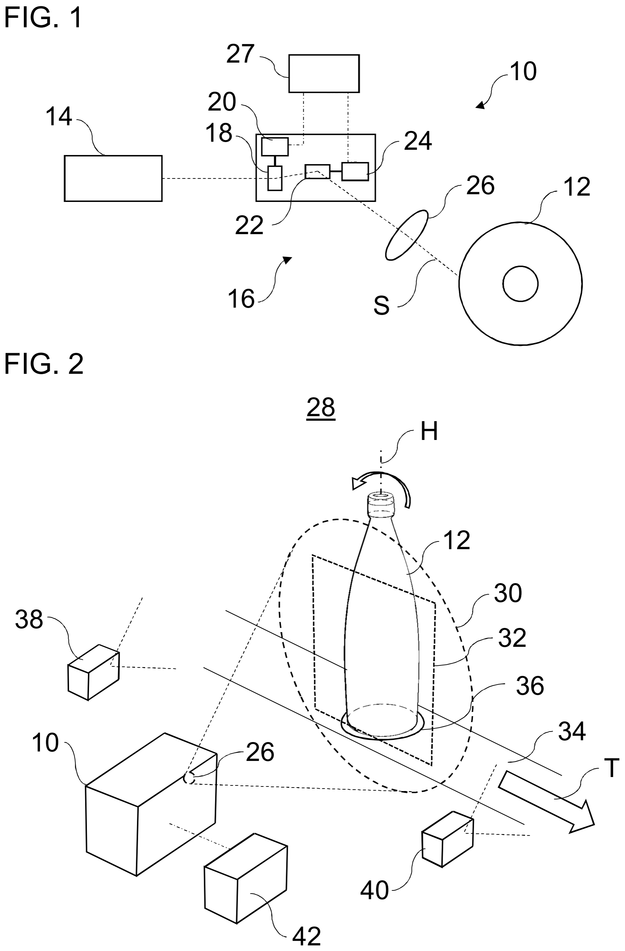

Die Figur 1 zeigt ein Lasermarkierungssystem 10 zum Lasermarkieren von Objekten 12. Bevorzugt sind die Objekte 12 als Behälter ausgeführt.

Das Lasermarkierungssystem 10 kann auch als Laserkennzeichnungssystem, Lasercodiersystem oder Laserbeschriftungssystem bezeichnet werden. Bevorzugt kann das Lasermarkierungssystem 10 ein CO2-Lasermarkierungssystem, ein Faser-Lasermarkierungssystem oder ein UV-Lasermarkierungssystem sein.

Bevorzugt kann das Lasermarkierungssystem 10 eine Laserquelle 14, einen Markierkopf 16, eine Fokussieroptik 26 und/oder eine Steuereinrichtung 27 aufweisen. Die Fokussieroptik 26 kann bspw. mit dem Markierkopf 16 integriert oder separat zu dem Markierkopf 16 angeordnet sein.

Die Laserquelle 14 kann beispielsweise als eine Laserröhre ausgeführt sein. Die Laserröhre kann versiegelt sein. Die Laserröhre kann mit einem Gas, z. B. aufweisend CO2, oder Gasgemisch, z. B. CO2-N2-He-Gasgemisch, gefüllt sein. In der Laserröhre können ebenfalls Elektroden angeordnet sein. An die Elektroden kann eine Versorgungseinheit angeschlossen sein (nicht dargestellt in Figur 1). Die Versorgungseinheit kann die Laserquelle 14 mit elektrischer Energie versorgen. Mittels einer bspw. hochfrequenten Spannung können Moleküle, z. B. CO2-Moleküle, in der Laserröhre zum Schwingen und damit zum Aussenden eines Laserstrahls S angeregt werden. Die Laserquelle 14 kann auch als Oszillator bezeichnet werden.

Der von der Laserquelle 14 erzeugte Laserstrahl S kann direkt oder über Spiegel zu dem Markierkopf 16 geleitet oder gelenkt werden. Es ist möglich, dass zwischen der Laserquelle 14 und dem Markierkopf 16 beispielsweise ein sogenanntes Teleskop zum Aufweiten des Laserstrahls S angeordnet ist.

Der Markierkopf 16 kann vorzugsweise zwei bewegbare Spiegel 18 und 22 sowie zwei Antriebe 20 und 24 aufweisen. Der Markierkopf 16 kann auch als Codierkopf, Kennzeichnungskopf oder Schreibkopf bezeichnet werden.

Der erste Antrieb 20 kann den ersten Spiegel 18 um eine erste Achse (z. B. x-Achse) drehen. Der erste Spiegel 18 kann bspw. auch als beweglicher Scanner-Spiegel, z. B. X-Scanner-Spiegel, bezeichnet werden. Der zweite Antrieb 24 kann den zweiten Spiegel 22 um eine zweite Achse (z. B. y-Achse) drehen. Der zweite Spiegel 22 kann bspw. auch als beweglicher Scanner-Spiegel, z. B. Y-Scanner-Spiegel, bezeichnet werden. Die erste Achse und die zweite Achse können bevorzugt senkrecht zueinander verlaufen.

Die durch die Antriebe 20, 24 bewegten Spiegel 18, 22 können den Laserstrahl S entsprechend der aufzubringenden Lasermarkierung lenken. Der Laserstrahl S kann sich dadurch bspw. schreibend über die Oberfläche des Objekts 12 bewegen. Bevorzugt kann sich der Laserstrahl S innerhalb des Markierungsfeldes 32 (siehe Figur 2), das dem jeweiligen Markierkopf 16 zugeordnet ist, über die Oberfläche des Objekts 12 bewegen.

Es ist möglich, dass das Lasermarkierungssystem 10 mehrere Markierköpfe 16 aufweist. Die mehreren Markierköpfe 16 können bspw. seitlich nebeneinander und/oder übereinander angeordnet sein. Beispielsweise können zwei, drei oder mehr Markierköpfe 16 umfasst sein.

Die Fokussieroptik 26 kann auch als Kondensor bzw. Kondensoroptik bezeichnet werden. Die Fokussieroptik 26 ist bevorzugt eine Planfeld-Fokussieroptik. Die Planfeld-Fokussieroptik kann eine planare Fokusebene vorgeben. Die Planfeld-Fokussieroptik kann beispielsweise ein F-Theta-Objektiv sein oder aufweisen. Bevor der Laserstrahl S auf die gekrümmte Oberfläche des Objekts 12 trifft, kann er mittels der Fokussieroptik 26 fokussiert werden.

Vorzugsweise kann die planare Fokusebene vertikal ausgerichtet sein. Bevorzugt ist die planare Fokusebene planparallel zu einer Laserausgabeseite der Fokussieroptik 26 bzw. des Lasermarkierungssystems 10.

Wie bereits erwähnt, kann die Fokussieroptik 26 innerhalb oder außerhalb des Markierkopfes 16 angeordnet sein.

Die Steuereinrichtung 27 kann den Markierkopf 16 des Lasermarkierungssystems 10 zum Erzeugen einer Lasermarkierung auf einer Fläche des Objekts 12 betreiben.

Beispielsweise kann die Steuereinrichtung 27 eine zweidimensionale Darstellung (2D-Darstellung) empfangen. Die zweidimensionale Darstellung kann bevorzugt in Form einer Bilddatei empfangen werden. Die zweidimensionale Darstellung kann bspw. eine Vektorgrafik oder eine Rastergrafik sein.

Bevorzugt kann die Steuereinrichtung 27 die Antriebe 20, 24 abhängig von der zweidimensionalen Darstellung betreiben. Beispielsweise kann die Steuereinrichtung 27 abhängig von der zweidimensionalen Darstellung Bewegungsbefehle, wie Antriebssignale, für die Antriebe 20, 24 erzeugen, um die Lasermarkierung zu erzeugen.

Die Figur 2 zeigt rein schematisch und beispielhaft eine Vorrichtung 28 zum Lasermarkieren. Der dargestellte Teil der Vorrichtung 28 weist einen Markierkopf 16 auf. Wie bereits erwähnt, kann das Lasermarkierungssystem 10 auch mehrere Markierköpfe 16 usw. aufweisen. Der dargestellte Teil der Vorrichtung 28 weist ferner einen Objektförderer 34 auf.

Vorzugsweise kann die Vorrichtung 28 in einer Behälterbehandlungsanlage, z. B. Getränkeabfüllanlage, zum Lasermarkieren von Lasermarkierungen auf gekrümmte Flächen von als Behälter, z. B. Flaschen oder Dosen, ausgeführten Objekten 12 angeordnet sein.

Die Anordnung und Ausbildung der Fokussieroptik 26 kann ein sogenanntes Fokussierfeld oder Linsenfeld (engl. lens field) 30 in der planaren Fokussierebene vorgeben. Das Linsenfeld 30 kann zweidimensional sein. Beispielsweise kann das Linsenfeld 30 eine Kreisform aufweisen. Bevorzugt kann das Linsenfeld 30 in einer Vertikalebene liegen.

Das Lasermarkierungssystem 10 kann zum Lasermarkieren innerhalb mindestens eines sogenannten Markierungsfeldes (engl. marking field) 32 ausgebildet sein.

Das Markierungsfeld 32 kann ein Abschnitt des Linsenfeldes 30 sein. Der Abschnitt bzw. das Markierungsfeld 32 kann alle Positionen umfassen, die der Laserstrahl S durch den oder die bewegbaren Spiegel des Markierkopfes 16 erreichen kann. Bei Eintritt eines Bereichs des Objekts 12 in das Markierungsfeld 32 kann das Lasermarkierungssystem 10 den Bereich lasermarkieren. Bei Austritt des Bereichs des Objekts 12 aus dem Markierungsfeld 32 kann das Lasermarkierungssystem 10 den Bereich nicht mehr lasermarkieren.

Eine Form und eine Abmessung des Markierungsfeldes 32 kann abhängig von den Spiegeln 18, 22 und deren durch die Antriebe 20, 24 bewirkten Bewegbarkeit sein (siehe Figur 1). Das Markierungsfeld 32 kann zweidimensional sein. Beispielsweise kann das Markierungsfeld 32 eine Rechteckform, vorzugsweise eine Quadratform, aufweisen. Bevorzugt kann das Markierungsfeld 32 in einer Vertikalebene liegen.

Jeder Markierkopf 16 kann sein eigenes Markierungsfeld 32 innerhalb des jeweiligen Linsenfeldes 30 bilden bzw. definieren. Mehrere Markierungsfelder 32 können zumindest teilweise beabstandet voneinander sein und/oder zumindest teilweise aneinander angrenzen oder einander überlappen.

Der Objektförderer 34 kann die Objekte 12 in einer Transportrichtung T transportieren. Je nach Konfiguration des Objektförderers 34 kann dieser die Objekte 12 auf einer gewünschten Transportbahn transportieren. Die Transportbahn kann beispielsweise eine lineare Transportbahn oder eine gekrümmte oder bogenförmige Transportbahn sein.

Beispielsweise kann der Objektförderer 34 ein Rundläufer-Objektförderer (Objektfördererkarussell) sein. Das Lasermarkierungssystem 10 kann beispielsweise innenliegend oder außenliegend von dem Rundläufer-Objektförderer angeordnet sein. Es ist auch möglich, dass das Lasermarkierungssystem 10 teilweise innenliegend und teilweise außenliegend von dem Rundläufer-Objektförderer angeordnet ist. Beispielsweise kann die mindestens eine Laserquelle 14 innenliegend von dem Rundläufer-Objektförderer angeordnet sein, und der mindestens eine Markierkopf 16 kann außenliegend von dem Rundläufer-Objektförderer angeordnet sein.

Alternativ kann der Objektförderer 34 beispielsweise ein Linear-Objektförderer sein. Das Lasermarkierungssystem 10 kann beispielsweise seitlich neben dem Linear-Objektförderer angeordnet sein. Der Linear-Objektförderer kann beispielsweise ein, vorzugsweise umlaufendes, Förderelement zum Transportieren der Objekte 12 aufweisen. Der Linear-Objektförderer kann beispielsweise ein Band-, Gurt-, Riemen-, Ketten- oder Plattenförderer sein. Es ist auch möglich, dass der Linear-Objektförderer als ein Langstator-Linearmotor-Objektförderer oder (magnetischer) Planarmotor-Antrieb-Objektförderer ausgeführt ist, der die Objekte 12 mittels Bewegungsvorrichtungen (mover, shuttle) unabhängig voneinander bewegen kann.

Der Objektförderer 34 kann die Objekte 12 beim Transportieren, vorzugsweise bodenseitig und/oder umfangsseitig, abstützen. Der Objektförderer 34 kann Objekthalterungen 36 (nur schematisch in Figur 2 angedeutet) zum Abstützen der Objekte 12 aufweisen. Die Objekthalterungen 36 können die Objekte 12 vorzugsweise im Basehandling oder Neckhandling halten.

Es ist möglich, dass der Objektförderer 34 keine gesonderten Objekthalterungen 36 aufweist und bspw. die Objekte 12 einfach auf einem, vorzugsweise umlaufenden, Förderelement (z. B. Band, Gurt, Riemen, Ketten oder Platten) des Objektförderers 34 abgestützt sind.

Beispielsweise können die Objekthalterungen 36 jeweils ein Objekt 12 abstützen. Die Objekthalterungen 36 können beispielsweise jeweils einen Behälterteller, eine Zentrierglocke, eine Behälterklammer und/oder eine Aufblasvorrichtung aufweisen.

Es ist möglich, dass der Objektförderer 34 dazu ausgebildet ist, die transportierten Objekte 12 jeweils um eine eigene Hochachse H zu drehen. Vorzugsweise können die Objekthalterungen 36 zum Drehen der Objekte 12 um deren jeweilige Hochachse H drehbar sein.

Optional kann die Vorrichtung 28 ferner mindestens eine Erfassungseinrichtung 38, 40 aufweisen.

Die mindestens Erfassungseinrichtung 38 kann auf den Objektförderer 34 bzw. auf die von dem Objektförderer 34 transportierten Objekte 12 gerichtet sein.

Beispielsweise kann die Erfassungseinrichtung 38 bezüglich der Transportrichtung T des Objektförderers 34 stromaufwärts von dem Lasermarkierungssystem 10 angeordnet sein oder in dem Lasermarkierungssystem 10 integriert sein.

Beispielsweise kann die Erfassungseinrichtung 40 bezüglich der Transportrichtung T des Objektförderers 34 stromabwärts von dem Lasermarkierungssystem 10 angeordnet sein oder in dem Lasermarkierungssystem 10 integriert sein.

Die mindestens eine Erfassungseinrichtung 38, 40 kann bspw. eine Kameravorrichtung, eine LED-Erfassungsvorrichtung oder eine Lasererfassungsvorrichtung aufweisen.

Die Erfassungseinrichtung 38 kann beispielsweise eine Krümmung einer zu lasermarkierenden gekrümmten Fläche des Objekts 12 erfassen, z. B. in Form eines Krümmungsradius.

Die Erfassungseinrichtung 40 kann beispielsweise die Lasermarkierung auf der gekrümmten Fläche des Objekts 12 erfassen. Die erfasste Lasermarkierung kann vorzugsweise als eine Bilddatei erfasst werden. Die erfasste Lasermarkierung ist bevorzugt eine Vektorgrafik oder eine Rastergrafik.

Die Verarbeitungseinrichtung 42 kann bspw. mit der Steuereinrichtung 27 des Lasermarkierungssystems 10 in Kommunikationsverbindung stehen. Die Verarbeitungseinrichtung 42 kann eine zweidimensionale Darstellung zum Lasermarkieren an die Steuereinrichtung 27 des Lasermarkierungssystems 10 senden. Die zweidimensionale Darstellung kann bevorzugt in Form einer Bilddatei empfangen werden. Die zweidimensionale Darstellung kann bspw. eine Vektorgrafik oder eine Rastergrafik sein.

Die Verarbeitungseinrichtung 42 kann zum Anpassen der zweidimensionalen Darstellung konfiguriert sein, wie hierin noch genauer erläutert ist.

Beispielsweise kann die Verarbeitungseinrichtung 42 ein PC oder ein Server sein. Alternativ kann die Verarbeitungseinrichtung 42 mit der Steuereinrichtung 27 integriert sein.

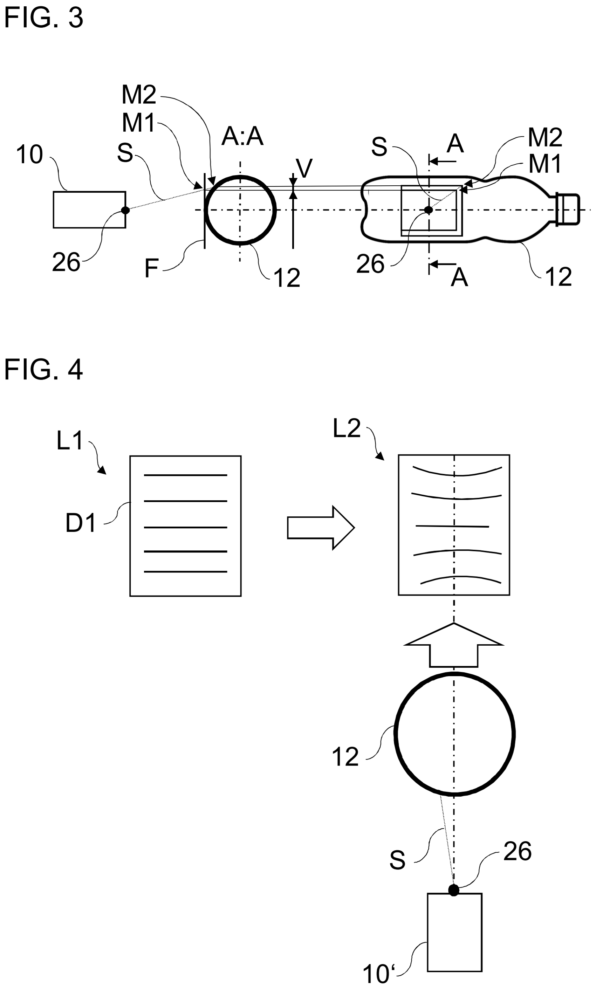

Die Figur 3 zeigt, dass ein von dem Lasermarkierungssystem 10 erzeugter Laserstrahl S auf eine gekrümmte Fläche des Objekts 12 zum Erzeugen der Lasermarkierung auftrifft. Die Fokusebene F des Lasermarkierungssystems 10 kann die gekrümmte Fläche bspw. im Wesentlichen tangieren oder parallel dazu etwas zur Behältermitte verschoben sein. Vorzugsweise kann die Fokusebene F auch einen Fokusbereich (Fokustiefenbereich) darstellen. Eine theoretische Fokusebene und zwei dazu parallele Ebenen im Abstand weniger Millimeter können den Fokusbereich bilden. Die theoretische Fokusebene kann dann vorzugsweise nicht tangential zur Oberfläche sein, sondern parallel dazu etwas zur Behältermitte hin verschoben sein. Dadurch erhöht man vorzugsweise die Überdeckung des Fokusbereichs mit der zu markierenden Oberfläche.

Beispielsweise im Randbereich der Lasermarkierung kann eine Markierstelle M1, die in der Fokusebene F liegt, von einer tatsächlichen Markierstelle M2, die auf der gekrümmten Fläche liegt, abweichen. Die Abweichung ist beispielhaft durch das Bezugszeichen V verdeutlicht. Die Abweichung V kann bspw. in einem Versatz, einer Verzerrung und/oder einem Positionsfehler bestehen. Die Abweichung V kann nicht nur in Förderrichtung vorhanden sein, sondern alternativ oder zusätzlich auch in Richtung einer Behälterachse (x- und y-Richtung) vorhanden sein, je nach örtlicher Lage der zu markierenden Stelle zum Laseraustrittspunkt.

Die Figur 4 zeigt rein schematisch, dass es wegen der zuvor erläuterten Abweichung V beim Lasermarkieren dazu kommen kann, dass eine tatsächliche Lasermarkierung L2 von einer gewünschten Lasermarkierung L1 abweicht. Die gewünschte Lasermarkierung L1 kann als eine zweidimensionale Darstellung D1 vorgegeben sein. Die tatsächliche Lasermarkierung L2 kann gegenüber der gewünschten Lasermarkierung L1 verzerrt sein, insbesondere in Randbereichen der tatsächlichen Lasermarkierung L2.

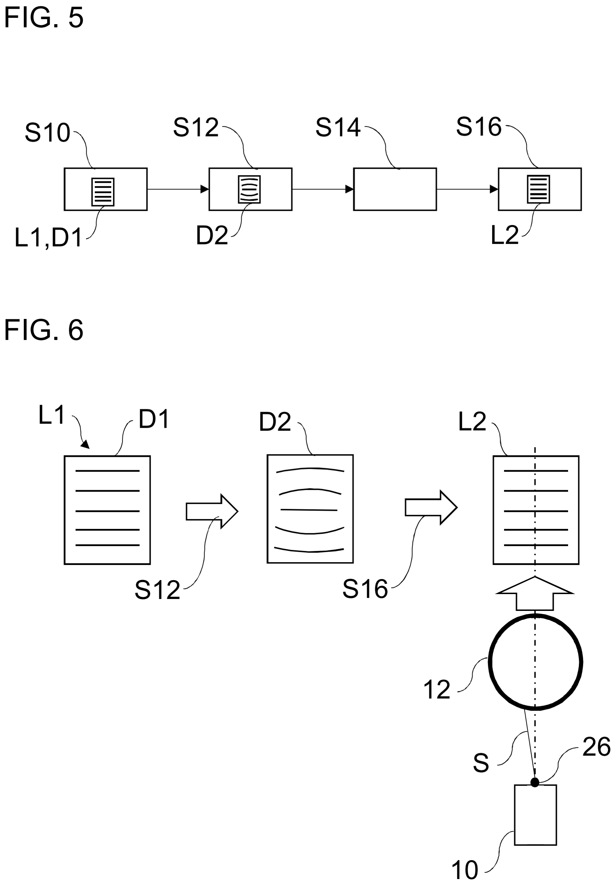

Eine Besonderheit der vorliegenden Offenbarung besteht nunmehr darin, dass diese Abweichung zwischen der gewünschten Lasermarkierung L1 und der tatsächlichen Lasermarkierung L2 zumindest reduziert oder sogar kompensiert werden kann. Dies ist nachfolgend unter Bezugnahme insbesondere auf die Figuren 5 und 6 erläutert.

In einem Schritt S10 wird eine zweidimensionale Darstellung D1 einer gewünschten Lasermarkierung L1 bereitgestellt. Bevorzugt wird die zweidimensionale Darstellung als eine Bilddatei bereitgestellt. Vorzugsweise kann die zweidimensionale Darstellung eine Rastergrafik oder eine Vektorgrafik sein.

Vorzugsweise kann die zweidimensionale Darstellung D1 auf der Verarbeitungseinrichtung 42 bereitgestellt werden. Beispielsweise kann die zweidimensionale Darstellung D1 von einer Kommunikationsschnittstelle empfangen und an die Verarbeitungseinrichtung 42 gesendet werden. Alternativ kann die zweidimensionale Darstellung D1 bspw. auf der Verarbeitungseinrichtung 42 erstellt werden.

In einem Schritt S12 kann die bereitgestellte zweidimensionale Darstellung D1 abhängig von einer Krümmung des Objekts 12 zu einer angepassten zweidimensionalen Darstellung D2 angepasst werden. Vorzugsweise wird die zweidimensionale Darstellung D1 als eine Bilddatei (Grafikdatei) zu der zweidimensionalen Darstellung D2 angepasst.

Bevorzugt kann die bereitgestellte zweidimensionale Darstellung D1 mittels der Verarbeitungseinrichtung 42 zu der angepassten zweidimensionalen Darstellung D2 angepasst werden, vorzugsweise teilautomatisch oder vollautomatisch.

Die Krümmung des Objekts 12 kann beim Anpassen bspw. in Form eines Krümmungsradius oder einer davon abgeleiteten oder verwandten Größe des Objekts 12 berücksichtigt werden. Beispielsweise kann die Krümmung mittels der Erfassungseinrichtung 38 erfasst werden. Alternativ kann die Krümmung bspw. mittels einer Benutzerschnittstelle der Vorrichtung 28 vorgegeben oder mittels einer Kommunikationsschnittstelle der Vorrichtung 28 empfangen werden.

Die Krümmung kann für jedes Objekt 12 bzw. für jede zu lasermarkierende Fläche des Objekts 12 individuell bzw. einzeln erfasst, vorgegeben oder empfangen werden. Alternativ kann die Krümmung bspw. einmalig für mehrere oder alle Objekte 12 erfasst, vorgegeben oder empfangen werden, z. B. bei einer Inbetriebnahme der Vorrichtung 28 oder des Lasermarkierungssystems 10

Die Krümmung bzw. die gekrümmte Fläche betrifft bevorzugt ein Flächensegment einer Kreiszylindermantelfläche.

Bevorzugt weist das Anpassen ein Verzerren der zweidimensionalen Darstellung D1 zur zweidimensionalen Darstellung D2 auf. Die zweidimensionale Darstellung D2 kann somit eine Verzerrung der zweidimensionalen Darstellung D1 sein. Die Verzerrung gegenüber der zweidimensionalen Darstellung D1 kann bspw. in Randbereichen der zweidimensionalen Darstellung D2 stärker ausgeprägt sein als in einem Zentrumsbereich der zweidimensionalen Darstellung D2.

Vorzugsweise kann eine von der Krümmung der gekrümmten Fläche des Objekts 12 beim Lasermarkieren bewirkte Verzerrung durch die Verzerrung der zweidimensionalen Darstellung D1 zur zweidimensionalen Darstellung D2 reduziert oder im Wesentlichen kompensiert werden. Damit kann vorzugsweise eine von der Krümmung der gekrümmten Fläche des Objekts 12 beim Lasermarkieren bewirkte Verzerrung invertiert werden. Die Verzerrung der bereitgestellten zweidimensionalen Darstellung D1 kann somit gegenläufig zu einer von der Krümmung der gekrümmten Fläche des Objekts 12 beim Lasermarkieren bewirkte Verzerrung sein.

Prinzipiell kann das Anpassen der bereitgestellten zweidimensionalen Darstellung D1 unter Berücksichtigung ermittelter geometrischer Abweichungen zwischen der gekrümmten Fläche und der planaren Fokusebene F erfolgen. Dies kann explizit unter Verwendung von vorgegebenen Formeln, z. B. der euklidischen Geometrie usw., erfolgen. Es ist auch möglich, dass das Anpassen der zweidimensionalen Darstellung D1 mittels Korrekturfaktoren, die abhängig von der Krümmung vorgegeben sind und auf die zweidimensionale Darstellung D1 angewendet werden, erfolgt. Alternativ oder zusätzlich kann das Anpassen unter Berücksichtigung von Laserstrahlwinkeln, unter denen ein von dem Lasermarkierungssystem 10 abgegebener Laserstrahl S auf unterschiedliche Punkte der gekrümmten Fläche auftrifft, erfolgen.

In einem optionalen Schritt S14 kann die angepasste zweidimensionale Darstellung D2 an die Steuereinrichtung 27 des Lasermarkierungssystems 10 übermittelt werden. Bevorzugt wird die angepasste zweidimensionale Darstellung D2 als eine Bilddatei an die Steuereinrichtung 27 des Lasermarkierungssystems 10 übermittelt.

Beispielsweise kann die Verarbeitungseinrichtung 42 die angepasste zweidimensionale Darstellung D2 an die Steuereinrichtung 27 senden. Die Steuereinrichtung 27 kann die gesendete, angepasste zweidimensionale Darstellung D2 von der Verarbeitungseinrichtung 42 empfangen.

In einem Schritt S16 wird eine Lasermarkierung L2 auf die gekrümmte Fläche des Objekts 12 mittels des Lasermarkierungssystems 10 abhängig von der angepassten zweidimensionalen Darstellung D2 lasermarkiert. Bevorzugt erfolgt das Lasermarkieren der Lasermarkierung L2 auf der gekrümmten Fläche spaltensegmentweise (spaltenweise in aneinander angrenzenden Segmenten).

Vorzugsweise kann das Lasermarkierungssystem 10 beim Lasermarkieren von der Steuereinrichtung 27 abhängig von der angepassten zweidimensionalen Darstellung D2 betrieben werden.

Beispielsweise kann die Steuereinrichtung 27 beim Lasermarkieren den Markierkopf 16 abhängig von der angepassten zweidimensionalen Darstellung D2 zum Erzeugen der Lasermarkierung L2 betreiben.

Hierfür kann die Steuereinrichtung 27 bspw. dazu konfiguriert sein, aus der angepassten zweidimensionalen Darstellung D2 Bewegungsbefehle für den Markierkopf 16 zu erzeugen. Die Bewegungsbefehle können vorzugsweise Antriebssignale für die Antriebe 20, 24 der Spiegel 18, 22 sein. Die Bewegungsbefehle können von der Steuereinrichtung 27 an den Markierkopf 16, vorzugsweise dessen Antriebe 20, 24, übermittelt werden. Beim Lasermarkieren der Lasermarkierung L2 können die Antriebe 20, 24 entsprechend der übermittelten Bewegungsbefehle betrieben werden.

Es ist möglich, dass bspw. die Steuereinrichtung 27 die Bewegungsbefehle ferner abhängig von einer Ort-Zeit-Komponente bezüglich des (geplanten) Laserstrahls S bzw. dessen Auftreffpunkt auf der gekrümmten Fläche des Objekts 12 erstellt. Dies kann vorzugsweise sowohl in Höhen- als auch in Breitenrichtung bezüglich der Fokusebene F erfolgen, da bspw. der Laserstrahl S nicht zeitgleich an allen Stellen Lasern kann und sich das Objekt 12 entlang der Transportrichtung T beim Lasern bewegen kann.

Optional kann die Lasermarkierung L2 auf der gekrümmten Fläche nach dem Lasermarkieren mittels der Erfassungseinrichtung 40 oder jeglicher anderen Erfassungseinrichtung (z. B. in einem Test- oder Qualitätssicherungslabor) erfasst werden. Es kann eine Abweichung zwischen der erfassten Lasermarkierung L2 und der gewünschten Lasermarkierung L1 bspw. mittels der Verarbeitungseinrichtung 42 ermittelt werden.

Vorzugsweise kann, sofern eine Abweichung ermittelt wird, die bereits angepasste zweidimensionalen Darstellung D2 abhängig von der ermittelten Abweichung zum Reduzieren oder Kompensieren der Abweichung bspw. mittels der Verarbeitungseinrichtung 42 weiter angepasst werden.

Bevorzugt kann diese weiter angepasste zweidimensionale Darstellung (z. B. Vektorgrafik oder Rastergrafik) zu dem Lasermarkierungssystem 10 übermittelt werden. Bevorzugt wird die weiter angepasste zweidimensionale Darstellung als eine Bilddatei an die Steuereinrichtung 27 des Lasermarkierungssystems 10 übermittelt.

Beispielsweise kann die Verarbeitungseinrichtung 42 die weiter angepasste zweidimensionale Darstellung an die Steuereinrichtung 27 senden. Die Steuereinrichtung 27 kann die gesendete, weiter angepasste zweidimensionale Darstellung von der Verarbeitungseinrichtung 42 empfangen.

Letztlich kann auf die gekrümmte Fläche mindestens eines weiteren Objekts 12 eine Lasermarkierung mittels des Lasermarkierungssystems 10 abhängig von der weiter angepassten zweidimensionalen Darstellung lasermarkiert werden. Dies kann beispielsweise analog zu den Erläuterungen zum Lasermarkieren der Lasermarkierung L2 abhängig von der angepassten zweidimensionale Darstellung D2 erfolgen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Lasermarkierungssystem
- 12: Objekt
- 14: Laserquelle
- 16: Markierkopf
- 18: erster Spiegel
- 20: erster Antrieb
- 22: zweiter Spiegel
- 24: zweiter Antrieb
- 26: Fokussieroptik
- 27: Steuereinrichtung
- 28: Vorrichtung zum Lasermarkieren
- 30: Linsenfeld
- 32: Markierungsfeld
- 34: Objektförderer
- 36: Objekthalterung
- 38: Erfassungseinrichtung
- 40: Erfassungseinrichtung
- 42: Verarbeitungseinrichtung

- A:A: Schnitt entlang Linie A-A in Figur 3
- D1: bereitgestellte zweidimensionale Darstellung
- D2: angepasste zweidimensionale Darstellung
- F: Fokusebene
- H: Hochachse
- L1: gewünschte Lasermarkierung
- L2: tatsächliche Lasermarkierung
- M1: theoretische Markierungsstelle in der Fokusebene
- M2: tatsächliche Markierungsstelle
- S: Laserstrahl
- S10-S16: Verfahrensschritte
- T: Transportrichtung
- V: Abweichung

## Patentansprüche

1. Verfahren zum Lasermarkieren von Objekten (12), vorzugsweise Behälter, mit einer gekrümmten Fläche, wobei das Verfahren aufweist:
Bereitstellen einer zweidimensionalen Darstellung (D1) einer gewünschten Lasermarkierung (L1);
Anpassen der bereitgestellten zweidimensionalen Darstellung (D1) abhängig von einer Krümmung der gekrümmten Fläche;
Lasermarkieren einer Lasermarkierung (L2) auf der gekrümmten Fläche eines Objekts (12) mittels eines Lasermarkierungssystems (10) abhängig von der angepassten zweidimensionalen Darstellung (D2).

2. Verfahren nach Anspruch 1, ferner aufweisend:
Übermitteln der angepassten zweidimensionalen Darstellung (D2) an eine Steuereinrichtung (27) des Lasermarkierungssystems (10),
wobei:
das Lasermarkierungssystem (10), vorzugsweise ein Markierkopf (16) des Lasermarkierungssystems (10), beim Lasermarkieren von der Steuereinrichtung (27) abhängig von der übermittelten, angepassten zweidimensionalen Darstellung (D2) betrieben wird.

3. Verfahren nach Anspruch 1 oder Anspruch 2, wobei das Lasermarkieren aufweist:
Erzeugen von Bewegungsbefehlen für einen Markierkopf (16), vorzugsweise von Antriebssignalen für Antriebe (20, 24) von Spiegeln (18, 22) des Markierkopfes (16), des Lasermarkierungssystems (10) abhängig von der angepassten zweidimensionalen Darstellung (D2); und
Übermitteln der erzeugten Bewegungsbefehle, vorzugsweise der Antriebssignale, an den Markierkopf (16).

4. Verfahren nach einem der vorherigen Ansprüche, wobei mindestens eines erfüllt ist von:
die zweidimensionale Darstellung (D1, D2) wird als eine Bilddatei bereitgestellt, angepasst und/oder übermittelt; und
die zweidimensionale Darstellung (D1, D2) ist eine Rastergrafik oder eine Vektorgrafik.

5. Verfahren nach einem der vorherigen Ansprüche, wobei:
das Anpassen der bereitgestellten zweidimensionalen Darstellung (D1) ein Verzerren der bereitgestellten zweidimensionalen Darstellung (D1) aufweist, vorzugsweise in Randbereichen der bereitgestellten zweidimensionalen Darstellung (D1), besonders bevorzugt mit hin zu den Randbereichen zunehmender Intensität des Verzerrens.

6. Verfahren nach Anspruch 5, wobei die bereitgestellte zweidimensionale Darstellung (D1) derart verzerrt wird, dass mindestens eines erfüllt ist von:
eine von der Krümmung der gekrümmten Fläche beim Lasermarkieren bewirkte Verzerrung wird reduziert oder im Wesentlichen kompensiert;
eine von der Krümmung der gekrümmten Fläche beim Lasermarkieren bewirkte Verzerrung wird invertiert; und
die Verzerrung der bereitgestellten zweidimensionalen Darstellung (D1) ist gegenläufig zu einer von der Krümmung der gekrümmten Fläche beim Lasermarkieren bewirkte Verzerrung.

7. Verfahren nach einem der vorherigen Ansprüche, ferner aufweisend:
Erfassen der Krümmung mittels einer, vorzugsweise optischen und/oder kameragestützten und/oder lasergestützten, Erfassungseinrichtung (38), vorzugsweise einmal für mehrere Objekte (12) oder individuell für jedes Objekt (12); oder
Vorgeben der Krümmung mittels einer Benutzerschnittstelle, vorzugsweise einmal für mehrere Objekte (12) oder individuell für jedes Objekt (12); oder
Empfangen der Krümmung mittels einer Kommunikationsschnittstelle, vorzugsweise einmal für mehrere Objekte (12) oder individuell für jedes Objekt (12).

8. Verfahren nach einem der vorherigen Ansprüche, wobei:
die gekrümmte Fläche ein Flächensegment einer Kreiszylindermantelfläche ist.

9. Verfahren nach einem der vorherigen Ansprüche, wobei:
das Anpassen der bereitgestellten zweidimensionalen Darstellung (D1) erfolgt mittels Korrekturfaktoren, die abhängig von der Krümmung vorgegeben sind und auf die bereitgestellte zweidimensionale Darstellung (D1) angewendet werden.

10. Verfahren nach einem der vorherigen Ansprüche, wobei:
das Anpassen erfolgt unter Berücksichtigung von Laserstrahlwinkeln, unter denen ein von dem Lasermarkierungssystem (10) abgegebener Laserstrahl (S) auf unterschiedliche Punkte der gekrümmten Fläche auftrifft.

11. Verfahren nach einem der vorherigen Ansprüche, wobei:
das Lasermarkierungssystem (10) eine Planfeld-Fokussieroptik (26), vorzugsweise aufweisend ein F-Theta-Objektiv, aufweist, die eine planare Fokusebene (F) vorgibt.

12. Verfahren nach Anspruch 11, wobei:
das Anpassen der bereitgestellten zweidimensionalen Darstellung (D1) unter Berücksichtigung ermittelter geometrischer Abweichungen zwischen der gekrümmten Fläche und der planaren Fokusebene (F) erfolgt.

13. Verfahren nach einem der vorherigen Ansprüche, ferner aufweisend:
Erfassen der Lasermarkierung (L2) auf der gekrümmten Fläche mittels einer Erfassungseinrichtung (40); und
Ermitteln einer Abweichung zwischen der erfassten Lasermarkierung (L2) und der gewünschten Lasermarkierung (L1); und optional
weiteres Anpassen der angepassten zweidimensionalen Darstellung (D2) abhängig von der ermittelten Abweichung, vorzugsweise zum Reduzieren oder Kompensieren der Abweichung; und
Lasermarkieren einer Lasermarkierung (L2) auf der gekrümmten Fläche mindestens eines weiteren Objekts (12) mittels des Lasermarkierungssystems (10) abhängig von der weiter angepassten zweidimensionalen Darstellung.

14. Vorrichtung (28) zum Lasermarkieren von Objekten (12), vorzugsweise Behältern, mit einer gekrümmten Fläche, wobei die Vorrichtung (28) ein Lasermarkierungssystem (10) aufweist und zum Ausführen eines Verfahrens nach einem der vorherigen Ansprüche konfiguriert ist.

15. Vorrichtung (28) nach Anspruch 14, ferner aufweisend:
einen Objektförderer (34), vorzugsweise Behälterförderer, zum Fördern der Objekte (12) entlang des Lasermarkierungssystems (10), vorzugsweise während des Lasermarkierens mittels des Lasermarkierungssystems (10).
